# EUROPÄISCHE PATENTSCHRIFT

(11) **EP 2 398 923 B1**
(45) Veröffentlichungstag und Bekanntmachung des Hinweises auf die Patenterteilung: **26.12.2012**
(21) Anmeldenummer: 10704528.8
(22) Anmeldetag: 03.02.2010
(51) Int. Cl.: C21B 5/06, C21B 13/00

(54) **VERFAHREN UND ANLAGE ZUM HERSTELLEN VON SUBSTITUTGAS**
METHOD AND PLANT FOR THE PRODUCTION OF SUBSTITUTE GAS
PROCÉDÉ ET INSTALLATION DE PRODUCTION DE GAZ DE SUBSTITUTION

(30) Priorität: 20.02.2009 AT 2832009
(43) Veröffentlichungstag der Anmeldung: 28.12.2011
(73) Patentinhaber: Siemens VAI Metals Technologies GmbH, 4031 Linz (AT)
(72) Erfinder: MILLNER, Robert, A-3382 Loosdorf (AT); PLAUL, Jan-Friedemann, A-4020 Linz (AT); WIEDER, Kurt, A-4311 Schwertberg (AT)
(74) Vertreter: Maier, Daniel Oliver
(86) Internationale Anmeldenummer: PCT/EP2010/051310
(87) Internationale Veröffentlichungsnummer: WO 2010/094566

(56) Entgegenhaltungen:
- US-A- 3 019 100
- US-B1- 6 478 841

## Beschreibung

Die Erfindung betrifft ein Verfahren und eine Anlage zur Reduktion von teilchenförmigem, eisenoxidhältigem Material, wobei das eisenoxidhältige Material in einer Reduktionszone mit Reduktionsgas zumindest teilweise reduziert und das bei der Reduktion entstehende Abgas abgezogen und einer CO₂-Reinigung unterworfen wird, bei der ein CO₂-hältiges Tailgas abgeschieden wird.

Es ist z.B. aus der US 6,478,841 B1 bekannt, dass Reduktionsgas, das nach dem Reduktionsprozess aus einer Reduktionszone als Topgas abgezogen wird, einer erneuten Nutzung zugeführt wird. Dazu ist es bekannt, dass das Topgas zunächst gereinigt und das CO₂ aus dem Topgas abgeschieden wird. Durch die Abtrennung des CO₂ und/oder H₂O wird das Reduktionspotential des Topgases erhöht kann erneut zur Reduktion herangezogen werden. Ebenso kann das dabei abgeschiedene CO₂-reiche gas einer Nutzung zugeführt werden.

Das bei der CO₂-Reinigung gewonnene CO₂-hältige Tailgas weist eine schwankende Zusammensetzung auf. Es ist aus dem Stand der Technik bekannt, dass das Tailgas thermisch verwertet wird, wobei die dabei entstehende Energie im Verfahren genutzt werden kann.

Nachteilig ist dabei, dass dennoch erhebliche Mengen an Abgas anfallen, die in die Atmosphäre abgeführt werden müssen.

Es ist daher eine Aufgabe der Erfindung ein Verfahren und eine Anlage zur Verfügung zu stellen, die eine Nutzung des Tailgases unter Reduktion der Umweltbelastung und als Ersatz von Inertgas im Prozess ermöglicht.

Diese Aufgabe wird durch das erfindungsgemäße Verfahren nach Anspruch 1 und durch die Anlage nach Anspruch 9 gelöst.

Durch das erfindungsgemäße Verfahren wird ein Substitutgas gebildet, das durch die Verbrennung, insbesondere mit reinem Sauerstoff, keine brennbaren Anteile mehr aufweist und daher nach einer Entwässerung ein Eigenschaftsprofil aufweist, das dem eines Inertgases entspricht und damit als kostengünstige Alternative anstelle von Inertgasen genutzt werden kann. Ein Vorteil der Verwendung des Tailgases zur Herstellung eines Inertgases ist, dass dieses einen sehr niedrigen Stickstoff (N₂) Gehalt aufweist. Weiters werden durch die Nutzung des Tailgases CO₂-Emissionen und Betriebskosten für das Eisenerzeugungsverfahren reduziert. Für die Verbrennung ist es sinnvoll technisch reinen Sauerstoff oder zumindest ein sauerstoffhältiges Gas einzusetzen, das zumindest 90%, vorteilhaft mehr als 99% Sauerstoffanteil aufweist. Dabei ist es möglich ein Substitutgas mit einem CO₂-Anteil >95% zu erzeugen, das nur noch geringe Anteile an Stickstoff und Sauerstoff aufweist.

Das Tailgas kann aus dem Abgas eines Reduktionsprozesses gewonnen werden. Dazu kann Topgas z.B. aus einem Hochofen oder einem Reduktionsschacht oder Offgas aus einem Wirbelschichtaggregat oder Überschussgas aus einem Schmelzreduktionsverfahren genutzt werden.

Bei der Reduktion des teilchenförmigen, eisenoxidhältigen Materials in der Reduktionszone kann zunächst ein Eisenschwamm hergestellt werden, der nachfolgend zu Roheisen erschmolzen wird, es ist aber auch denkbar, dass dies kontinuierlich in einem Hochofen erfolgt, wo eine Schmelzreduktion erfolgt.

Durch das vorteilhafte Verfahren können stickstoffhältige Inertgase, die in metallurgischen Anlagen und Verfahren häufig Anwendung finden, ersetzt werden. Stickstoff im Inertgas hat vor allem beim Recycling von Prozessgasen den Nachteil, dass es zu einer Anreicherung des Stickstoffs kommt, der technisch nur sehr aufwändig und damit unwirtschaftlich wieder entfernt werden kann. Aufgrund der Nutzung des Substitutgases anstelle von Stickstoff kann eine Abtrennung des CO₂ aus einem rezyklierten Prozessgas wesentlich einfacher durch bekannte technische Verfahren erfolgen. Da die Gasmenge insgesamt reduziert wird, weil das Substitutgas im Gegensatz zum Inertgas abgeschieden werden kann, verringert sich auch der Stromverbrauch und die Anlagen zur Eisenerzeugung und Rezyklierung der Prozessgase können kleiner und kostengünstiger ausgeführt werden.

Weiters eignet sich das Substitutgas für die Sequestrierung von CO₂, da viele Sequestrierungsverfahren hohe Anforderungen an die Reinheit des Gases stellen.

Gemäß einer vorteilhaften Ausgestaltung des erfindungsgemäßen Verfahrens wird das Substitutgas nach der Verbrennung in zumindest einer Stufe, insbesondere auf eine Temperatur von 20 bis 60°C, gekühlt und entwässert und verdichtet und gegebenenfalls getrocknet. Durch die Abkühlung des heißen Substitutgases kann z.B. mittels Kondensation Feuchte abgeschieden und somit das Substitutgas entwässert werden. Dies ist bei einer Nutzung als Ersatz für Inertgas wichtig, da es sonst zu Kondensation in Versorgungsleitungen und damit zu Korrosion und Betriebsstörungen kommen kann. Durch die Verdichtung wird das Substitutgas auf ein Druckniveau gebracht, wie es für technisch übliche Anwendungen benötigt wird. Das das Tailgas aus der CO₂-Abscheidung geringe Drücke von etwa 0,1 bar aufweist, ist eine Verdichtung des Substitutgases nötig. Durch eine optionale Trocknung kann der Feuchtegehalt des Substitutgases weiter gesenkt werden.

Erfindungsgemäß erfolgt die Verbrennung des Gemisches aus Tailgas und sauerstoffhältigem Gas in einer Brennkammer. Die Brennkammer ermöglicht eine Verbrennung unter kontrollierten Bedingungen, wobei insbesondere eine vollständige Verbrennung angestrebt wird. Weiters kann die Verbrennungstemperatur in bestimmten Bereichen gehalten werden, sodass ein stabiler Betrieb bei weitgehend konstanten Bedingungen möglich wird. Dies ist sinnvoll, da das Tailgas zeitlich gesehen keine konstante Zusammensetzung aufweist und daher die Verbrennung entsprechend beeinflusst werden muss.

Nach einer besonders vorteilhaften Ausgestaltung des erfindungsgemäßen Verfahrens wird das Tailgas mittels eines Gebläses oder eines Kompressors, insbesondere mengengeregelt über eine Flussmengenregelung, in das Brennersystem eingebracht. Das Tailgas weist beim Austritt aus der CO₂-Reinigung einen geringen Druck auf, wobei dessen Menge und Druckniveau prozessbedingt auch schwanken kann. Durch das Gebläse und einer Flussmengenregelung kann die Menge an Tailgas gezielt eingestellt und somit in das Brennersystem eingebracht werden. Optional kann das Tailgas in einem Gasspeicher zwischengespeichert werden, um z.B. Schwankungen in der Zusammensetzung und Menge auszugleichen, wobei vor allem Brennwertschwankungen ausgeglichen und somit eine Verbrennung unter stabilen Verhältnissen möglich wird.

Nach einer weiteren vorteilhaften Ausgestaltung des erfindungsgemäßen Verfahrens wird zumindest ein Teil des Substitutgases, gegebenenfalls nach einer Entwässerung und/oder einer Verdichtung mit dem sauerstoffhältigen Gas gemischt und zum Brennersystem rückgeführt. Nach der Entwässerung kann das Druckniveau des Substitutgases angepasst werden. Durch die Rückführung des Substitutgases kann das Gemisch aus zu verbrennendem Gas und dem sauerstoffhältigem Gas modifiziert werden, wobei die Anteile an brennbaren Komponenten im Gasgemisch verändert werden.

Die erfindungsgemäße Vorgehensweise gestattet z.B. die Verbrennungstemperatur oder die Temperatur der Brennkammer und des Substitutgases einzustellen. Damit kann die Bildung von Stickoxiden (NOₓ) verhindert oder zumindest erheblich reduziert werden.

Nach einer besonderen Ausgestaltung des erfindungsgemäßen Verfahrens erfolgt die mengenmäßige Zufuhr des rückgeführten Substitutgases zum Brennersystem derart, dass die Flammentemperatur bei der Verbrennung der Gase konstant gehalten wird. Damit ist es möglich eine Verbrennung unter optimierten und konstanten Bedingungen sicherzustellen.

Gemäß einer geeigneten Ausgestaltung des erfindungsgemäßen Verfahrens wird das Tailgas vor der Verbrennung mit Topgas, Offgas oder Überschussgas aus einem Reduktions- oder Schmelzreduktionsverfahren gemischt. Reduktionsgase werden nach der Reduktion von teilchenförmigem, eisenoxidhältigem Material aus der Reduktionszone abgezogen. Bei einem Reduktionsschacht oder bei einem Hochofen wird dieses Gas als Topgas, bei einem Wirbelschichtaggregat als Offgas bezeichnet. Weiters kann Reduktionsgas, das aktuell nicht im Verfahren benötigt wird, das sogenannte Überschussgas ebenso genutzt werden. Durch den Zusatz der genannten Gase kann die Verbrennungstemperatur und die Substitutgasmenge beeinflusst bzw. eingestellt werden.

Gemäß einer vorteilhaften Ausgestaltung des erfindungsgemäßen Verfahrens findet das entwässerte und verdichtete und gegebenenfalls getrocknete Substitutgas in Sperrgassystemen einer Oxid- und/oder Kohlechargierung oder als Treibgas einer Kohleeindüsung oder zur Kühlung von Brennerlanzen oder als Spül- und Kühlgas oder zur Steuerung der Flammentemperatur einer Raceway oder bei Brennersystemen oder zur pneumatischen Förderung als Trägergas Einsatz. Durch den hohen Anteil an CO₂ kann das entwässerte und verdichtete Substitutgas in einer Vielzahl von Anwendungen genutzt werden, wobei der technisch weit verbreitete Stickstoff oder andere Inertgase ersetzt werden können. Unter Raceway versteht der Fachmann den sich beim Einblasen in einem metallurgischen Reaktor bildenden blasenförmigen Hohlraum.

Nach einer vorteilhaften Ausgestaltung des erfindungsgemäßen Verfahrens werden das Tailgas und/oder das sauerstoffhältige Gas und/oder das rückgeführte Substitutgas vor der Verbrennung und unter Nutzung der bei der Verbrennung entstehenden Abwärme vorgewärmt. Die Abwärme aus der Verbrennung in der Brennkammer kann zur Vorwärmung der genannten Gase genutzt werden, sodass eine noch genauere Einstellung der Temperatur bei der Verbrennung erreicht wird. Damit kann auch die Zusammensetzung des Substitutgases wie z.B. der NOₓ-Anteile kontrolliert werden.

Die erfindungsgemäße Anlage hat den Vorteil, dass das CO₂-hältige Tailgas aus einer CO₂-Abscheidungseinrichtung durch eine einfach aufgebaute Anlage optimiert zu einem nicht mehr brennbaren und relativ ungefährlichen Substitutgas umgesetzt werden kann. Dazu ist ein Brennersystem zum Mischen des Tailgases mit einem sauerstoffhältigen Gas, insbesondere reinem Sauerstoff, vorgesehen und eine Brennkammer, in die diese Gase eingebracht und unter Bildung eines Substitutgases verbrannt und über eine Substitutgasableitung abgeführt werden können. Optional kann ein Gasspeicher zur Zwischenspeicherung des Tailgases vor dessen Mischung mit dem sauerstoffhältigen Gas in dem Brennersystem vorgesehen werden. Durch den Gasspeicher kann die Zusammensetzung des Tailgases weitgehend homogenisiert werden, da das Tailgas prozessbedingt Schwankungen hinsichtlich seiner Zusammensetzung damit seines Brennwertes aufweist, sodass eine stabile Verbrennung unter weitgehend konstanten Bedingungen sichergestellt werden kann.

Die Substitutgasleitung verbindet die Brennkammer mit einer Entwässerungseinrichtung zur Abscheidung von Wasser aus dem Substitutgas. Das nun entwässerte Substitutgas kann über technisch übliche Inertgassysteme den Inertgasverbrauchern zugeführt werden. Aufgrund des sehr hohen Anteils an CO₂ und den geringen Anteilen an N₂ eignet sich dieses Substitutgas für eine Vielzahl von Anwendungen. Durch das Brennersystem wird eine sehr innige Mischung des Tailgases mit dem sauerstoffhältigen Gas erreicht, sodass eine vollständige Verbrennung der brennbaren Anteile des Tailgases sichergestellt werden kann.

Übliche CO₂-Abscheidungseinrichtungen arbeiten z.B. nach dem Prinzip einer Druckwechseladsorption oder einer Vakuum-Druckwechseladsorption und sind dem Fachmann bekannt.

Gemäß einer alternativen Ausgestaltung der erfindungsgemäßen Anlage ist zumindest ein Verdichter zwischen dem Gasspeicher und der Brennkammer angeordnet, der zum Verdichten des Tailgases dient. Die Verdichtung vor der Verbrennung hat den Vorteil, dass die Anlagenkomponenten bei höherem Druck betrieben werden und damit kompakter ausgeführt werden können.

Eine mögliche Variante der erfindungsgemäßen Anlage sieht vor, dass zumindest ein Substitutgasverdichter zum Verdichten des entwässerten Substitutgases vorgesehen ist. Damit kann das Druckniveau für die weitere Verwendung des Substitutgases entsprechend angepasst werden.

Gemäß einer alternativen Ausgestaltung der erfindungsgemäßen Anlage ist ein Gebläse oder ein Kompressor und gegebenenfalls ein Flussmengenregler zum Zuführen des Tailgases in das Brennersystem vorgesehen. Da das Tailgas prozessbedingt einen sehr geringen Druck aufweist, muss dieses durch ein Gebläse oder Kompressor zugefördert werden, wobei auch die mengenmäßige Regelung des Tailgases erfolgt.

Nach einer weiteren Ausgestaltung der erfindungsgemäßen Anlage ist eine Rückführleitung zur Rückführung eines Teils des entwässerten Substitutgases und zur Einleitung nach Zumischung von Sauerstoff in das Brennersystem vorgesehen, wobei diese stromabwärts der Entwässerungseinrichtung aus der Substitutgasleitung abzweigt. Damit kann bei Bedarf ein Teil des entwässerten Substitutgases in das Brennersystem rückgeführt werden, wodurch die Verbrennung durch die Zufuhr nicht brennbarer Anteile beeinflusst werden kann.

Nach einer vorteilhaften Ausgestaltung der erfindungsgemäßen Anlage ist eine weitere Entwässerungseinrichtung zum Entwässern des verdichteten Substitutgases vorgesehen. Durch die zusätzliche Entwässerung wird ein noch geringerer Anteil an Feuchte im Substitutgas erzielt.

Gemäß einer besonderen Ausgestaltung der erfindungsgemäßen Anlage umfasst die Entwässerungseinrichtung eine Kühl- und Abwärmerückgewinnungseinrichtung und einen Kondensatabscheider zur Abscheidung von Wasser aus dem Substitutgas. Die Entwässerung mittels Kondensation hat sich als bewährte Technologie herausgestellt.

Nach einer besonders vorteilhaften Ausgestaltung der erfindungsgemäßen Anlage ist stromabwärts der Abzweigung der Rückführleitung aus der Substitutgasleitung ein weiterer Verdichter angeordnet. Durch den Verdichter kann der Druck des Substitutgases, das nicht rückgeführt wird gesondert eingestellt und für die nachfolgende Nutzung angepasst werden.

Im Folgenden wird die Erfindung beispielhaft anhand der Figuren 1 bis 4 näher erläutert.

Fig. 1 und 2: Anlagen zur Herstellung von Substitutgas in zwei Ausführungsformen.

Fig. 3 und 4: Erfindungsgemäße Anlagen zur Herstellung von Substitutgas mit Rückführung von Substitutgas in zwei Ausführungsformen.

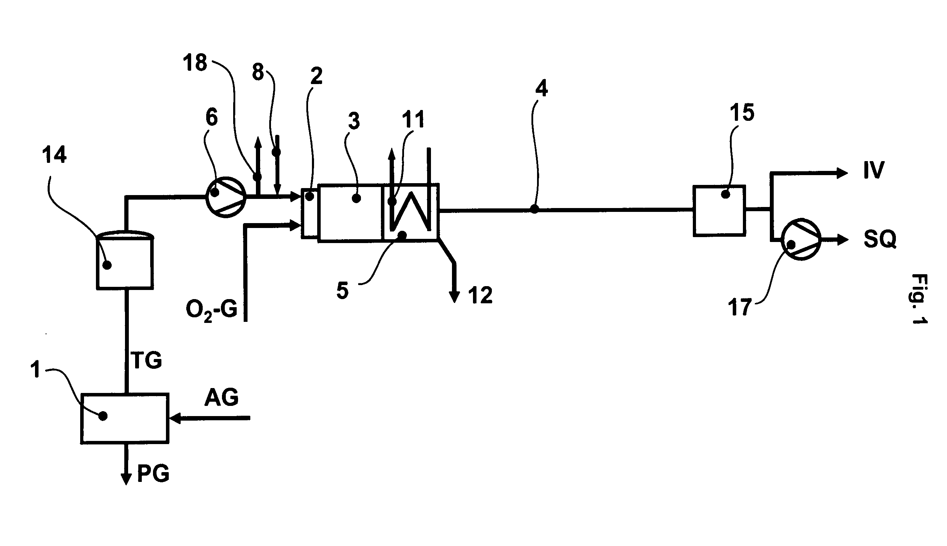

Figur 1 zeigt eine Anlage zur Herstellung von Substitutgas. Aus einem nicht dargestellten Reduktionsaggregat, das ein Hochofen, ein Reduktionsschacht, ein Wirbelschichtaggregat oder auch ein Einschmelzvergaser sein kann, wird das abgezogene Abgas AG, also das bereits zur Reduktion genutzte Reduktionsgas, der CO₂-Abscheidungseinrichtung 1 zugeführt. Dabei werden ein Produktgas PG und ein CO₂-hältiges Tailgas TG gebildet, wobei letzteres zunächst in einem Gasspeicher 14 zwischengespeichert wird. Das Volumen des Gasspeichers 14 wird derart gewählt, dass Schwankungen in der Zusammensetzung des Tailgases weitgehend ausgeglichen werden. Über einen Kompressor 6, der z.B. als zweistufiger Schraubenverdichter, Kolbenverdichter oder mehrstufiger Turbokompressor ausgebildet sein kann, wird das Tailgas TG zunächst auf einen Druck von 6 bis 12 barg verdichtet und einem Brennersystem 2 zugeführt, in dem das Tailgas TG mit sauerstoffhältigem Gas O₂-G gemischt wird. Zumeist wird dazu technisch reiner Sauerstoff zugesetzt. Durch die Verdichtung des Tailgases TG vor der Verbrennung ist es möglich das Substitutgas mit nur einer Entwässerung bzw. einer Kühlung vorzusehen, sodass ein einfacher Aufbau der Anlage möglich wird.

Optional kann auch über eine Zuleitung 8 Abgas AG, wie z.B. Topgas, Offgas oder Überschussgas direkt mit dem Tailgas gemischt und dem Brennersystem 2 zugeführt werden.

Das Gemisch aus Tailgas und sauerstoffhältigem Gas O₂-G und gegebenenfalls Abgas AG wird nun einer Brennkammer 3 zugeführt, in der das Tailgas TG und gegebenenfalls das Abgas AG weitgehend vollständig verbrannt werden, sodass das bei der Verbrennung gebildete Substitutgas einen sehr hohen Anteil an CO₂ und nur geringe Mengen an Wasserdampf, Stickstoff oder Sauerstoff aufweist. Das bei der Verbrennung gebildete Substitutgas wird über die Substitutgasleitung 4 der Entwässerungseinrichtung 5 zugeführt und durch diese Feuchte aus dem Substitutgas weitgehend abgetrennt. Die Brennkammer kann auch mit der Entwässerungseinrichtung 5 zu einer Baueinheit zusammengefasst sein. Die Entwässerungseinrichtung 5 kann einen Kühler bzw. eine Abwärmerückgewinnungseinrichtung 11 und einen Kondensatabscheider 12 umfassen, wobei das abgetrennte Wasser über eine Leitung als Kondensat abgeführt wird. Zusätzlich kann eine Trocknungseinrichtung 15 vorgesehen werden, um den Feuchtegehalt im Substitutgas unter den Taupunkt des Gases weiter zu senken. Das getrocknete Substitutgas kann nun einem Inertgasverbraucher IV oder nach einer Drucksteigerung mittels eines Sequestrier-Verdichters 17 einer CO₂-Sequestrierung SQ zugeführt werden.

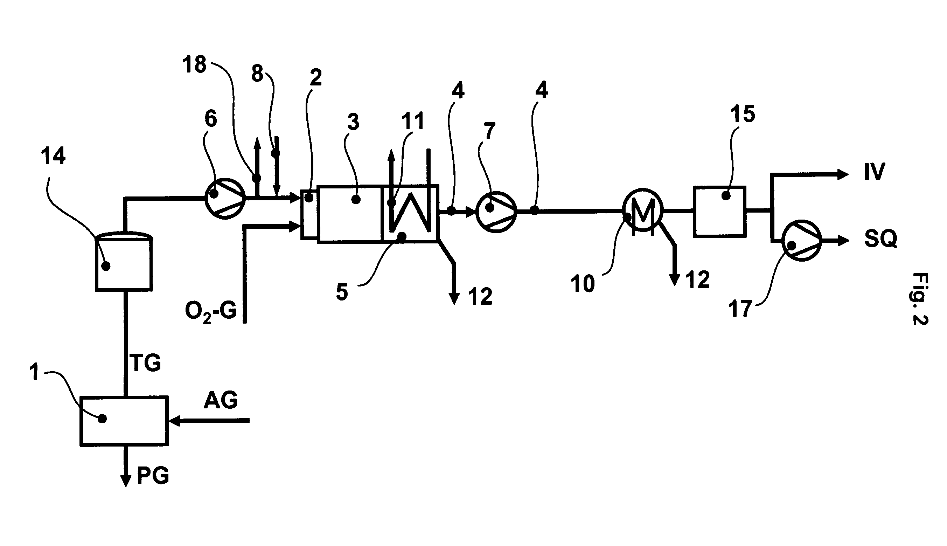

Fig. 2 ist eine alternative Ausgestaltung, die sich von der in Fig. 1 gezeigten Anlage dadurch unterscheidet, dass ein Gebläse 6 zur geringfügigen Verdichtung des Tailgases TG auf einen Druck von etwa 0,1 bis 0,3 barg vorgesehen ist. Zusätzlich erfolgt eine Verdichtung des Substitutgases mittels eines Substitutgasverdichters 7 auf einen Druck von 6-12 barg. Der Substitutgasverdichter 7 kann z.B. als zweistufiger Schraubenverdichter, Kolbenverdichter oder mehrstufiger Turbokompressor ausgeführt sein.

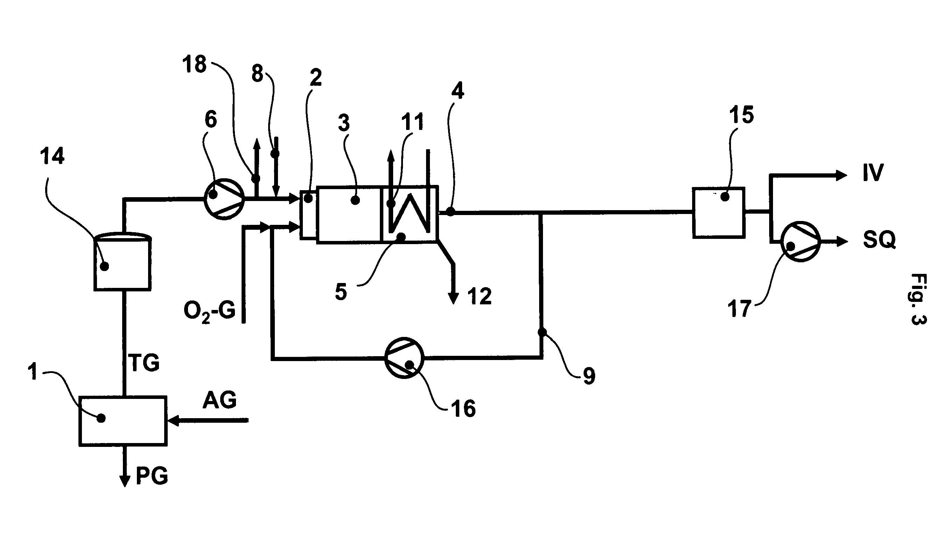

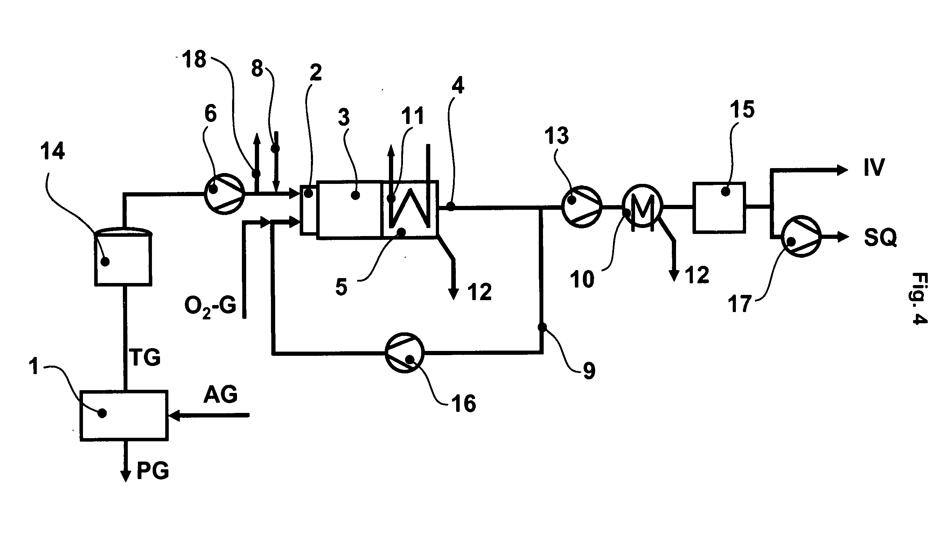

Fig. 3 bzw. 4 zeigen jeweils eine erfindungsgemäße Anlage zur Herstellung von Substitutgas mit Rückführung von Substitutgas. Hierbei ist jeweils eine Rückführleitung 9 zur Rückführung eines Teils des entwässerten Substitutgases in das Brennersystem 2 vorgesehen. Damit kann die Verbrennung des Tailgases und die dabei entstehende Flammentemperatur eingestellt werden. Die Rückführleitung 9 zweigt dabei aus der Substitutgasleitung 4 stromabwärts der Entwässerungseinrichtung 5 ab.

Nach Fig. 4 können stromabwärts der Abzweigung der Rückführleitung 9 aus der Substitutgasleitung 4 ein weiterer Verdichter 13, eine zusätzliche Entwässerungseinrichtung 10 und eine Trocknungseinrichtung 15 vorgesehen werden. Analog zur Ausgestaltung nach Fig. 2 ist ein Gebläse 6 zur geringfügigen Verdichtung des Tailgases TG auf einen Druck auf etwa 0,1 bis 0,3 barg und ein weiterer Verdichter 13 zur Verdichtung auf einen Druck von 6 bis 12 barg vorgesehen.

Optional kann für alle Ausgestaltungen gemäß einer der Figuren 1 bis 4 stromabwärts des Gebläses bzw. des Kompressors 6 eine Anfahr- bzw. Mengenausgleichsleitung 18 vorgesehen werden. Diese dient dazu die Menge des Tailgases, welche nicht zur Erzeugung von Substitutgas bzw. zur Sequestrierung genutzt wird, zu einem Exportgasstrom zuzumischen, der z.B. aus einem Reduktionsverfahren ausgeschleust wird. Alternativ kann die Anfahr- bzw. Mengenausgleichsleitung 18 auch stromaufwärts des Gasspeichers 14 oder des Gebläses bzw. des Kompressors 6 angeordnet werden, um hier das nicht benötigte Tailgas TG abzuführen.

Zur Förderung bzw. zur Verdichtung des rückgeführten Substitutgases kann ein Verdichter 16 in der Rückführleitung 9 vorgesehen werden. Über eine separate Zuführung wird das sauerstoffhältige Gas O₂-G erst mit dem rückgeführten Substitutgas gemischt und dann in das Brennersystem 2 eingebracht. Stromabwärts der Abzweigung der Rückführleitung 9 kann ein weiterer Verdichter 13, eine zusätzliche Entwässerungseinrichtung 10 und eine Trocknungseinrichtung 15 vorgesehen werden.

Bei den Ausführungsbeispielen nach Figur 2 bzw. 4 ist es nicht nötig die Brennkammer 3 und/oder den Kühler bzw. die Abwärmerückgewinnungseinrichtung 11 als Druckbehälter ausgelegt werden, da der Druck ohnehin < 0.5 barg beträgt.

### Bezugszeichenliste

- 1: CO₂-Abscheidungseinrichtung
- 2: Brennersystem
- 3: Brennkammer
- 4: Substitutgasleitung
- 5: Entwässerungseinrichtung
- 6: Gebläse oder Kompressor
- 7: Substitutgasverdichter
- 8: Zuleitung
- 9: Rückführleitung
- 10: Entwässerungseinrichtung
- 11: Kühl- und Abwärmerückgewinnungseinrichtung
- 12: Kondensatabscheider
- 13: weiterer Verdichter
- 14: Gasspeicher
- 15: Trocknungseinrichtung
- 16: Verdichter
- 17: Sequestrier-Verdichter
- 18: Anfahr- bzw. Mengenausgleichsleitung 18

## Patentansprüche

1. Verfahren zur Reduktion von teilchenförmigem, eisenoxidhältigem Material, wobei das eisenoxidhältige Material in einer Reduktionszone mit Reduktionsgas zumindest teilweise reduziert und das bei der Reduktion entstehende Gas als Abgas abgezogen und anschließend einer CO₂-Abscheidung unterworfen wird, bei der ein CO₂-hältiges Tailgas abgeschieden wird, **dadurch gekennzeichnet, dass** das Tailgas zum Ausgleich von Mengen- und Brennwertschwankungen in einem Gasspeicher zwischengespeichert wird, mit einem sauerstoffhältigen Gas, insbesondere mit reinem Sauerstoff, in einem Brennersystem vermischt und unter Bildung eines Substitutgases verbrannt wird, wobei das Substitutgas nach einer Entwässerung als Substitut für Inertgas, insbesondere an Stelle von Stickstoff, genutzt wird, wobei zumindest ein Teil des Substitutgases nach einer Entwässerung und/oder einer Verdichtung zur Einstellung der Verbrennungstemperatur bei der Verbrennung des Tailgases, mit dem sauerstoffhältigen Gas gemischt und zum Brennersystem rückgeführt wird.

2. Verfahren nach Anspruch 1, **dadurch gekennzeichnet, dass** das Substitutgas nach der Verbrennung in zumindest einer Stufe, insbesondere auf eine Temperatur von 20 bis 60°C, gekühlt und entwässert und verdichtet und gegebenenfalls getrocknet wird.

3. Verfahren nach Anspruch 1 oder 2, **dadurch gekennzeichnet, dass** die Verbrennung des Gemisches aus Tailgas und sauerstoffhältigem Gas in einer Brennkammer erfolgt.

4. Verfahren nach einem der Ansprüche 1 bis 3, **dadurch gekennzeichnet, dass** das Tailgas mittels eines Gebläses oder eines Kompressors, insbesondere mengengeregelt über eine Flussmengenregelung, in das Brennersystem eingebracht wird.

5. Verfahren nach Anspruch 4, **dadurch gekennzeichnet, dass** die mengenmäßige Zufuhr des rückgeführten Substitutgases zum Brennersystem derart erfolgt, dass die Flammentemperatur bei der Verbrennung der Gase konstant gehalten wird.

6. Verfahren nach einem der Ansprüche 1 bis 5, **dadurch gekennzeichnet, dass** das Tailgas vor der Verbrennung mit Topgas, Offgas oder Überschussgas aus einem Reduktions- oder Schmelzreduktionsverfahren gemischt wird.

7. Verfahren nach einem der Ansprüche 1 bis 6, **dadurch gekennzeichnet, dass** das entwässerte und verdichtete und gegebenenfalls getrocknete Substitutgas in Sperrgassystemen einer Oxid- und/oder Kohlechargierung oder als Treibgas einer Kohleeindüsung oder zur Kühlung von Brennerlanzen oder als Spül- und Kühlgas oder zur Steuerung der Flammentemperatur einer Raceway oder bei Brennersystemen oder zur pneumatischen Förderung als Trägergas Einsatz findet.

8. Verfahren nach einem der Ansprüche 4 bis 7, **dadurch gekennzeichnet, dass** das Tailgas und/oder das sauerstoffhältige Gas und/oder das rückgeführte Substitutgas vor der Verbrennung und unter Nutzung der bei der Verbrennung des Tailgases entstehenden Abwärme vorgewärmt werden.

9. Anlage zur Reduktion von teilchenförmigem eisenoxidhältigen Material mit einem Reduktionsaggregat, in dem das eisenoxidhältige Material mittels eines Reduktionsgases zumindest teilweise reduziert und das Reduktionsgas als Topgas abgezogen wird und mit einer CO₂-Abscheidungseinrichtung (1), zur Abscheidung von CO₂ aus dem Topgas, wobei ein CO₂-hältiges Tailgas gebildet wird, **dadurch gekennzeichnet, dass** ein Brennersystem (2) zum Mischen des Tailgases mit einem sauerstoffhältigen Gas, insbesondere reinem Sauerstoff, und ein Gasspeicher (14) zur Zwischenspeicherung und Homogenisierung des Tailgases vor dessen Mischung mit dem sauerstoffhältigen Gas, vorgesehen sind und eine Brennkammer (3), in die diese Gase eingebracht und unter Bildung eines Substitutgases verbrannt und über eine Substitutgasableitung (4) abgeführt werden können, wobei eine Kühl- bzw. Abwärmerückgewinnungseinrichtung inkl. Entwässerungseinrichtung (5) zur Abscheidung von Wasser aus dem Substitutgas vorgesehen sind, sodass ein Substitut für Inertgas, insbesondere an Stelle von Stickstoff, gebildet wird, wobei eine Rückführleitung (9) zur Rückführung eines Teils des entwässerten Substitutgases und nach Zumischung von sauerstoffhältigem Gas zur Einleitung in das Brennersystem (2) zur Einstellung der Verbrennungstemperatur bei der Verbrennung des Tailgases vorgesehen ist, wobei diese stromabwärts der Entwässerungseinrichtung (5) aus der Substitutgasleitung (4) abzweigt.

10. Anlage nach Anspruch 9, **dadurch gekennzeichnet, dass** zumindest ein Verdichter (6) zwischen dem Gasspeicher (14) und dem Brennersystem (2) angeordnet ist, der zum Verdichten des Gemisches aus Tailgas und sauerstoffhältigem Gas und gegebenenfalls rückgeführtem Substitutgas dient.

11. Anlage nach Anspruch 9 oder 10, **dadurch gekennzeichnet, dass** zumindest ein Substitutgasverdichter (7) zum Verdichten des entwässerten Substitutgases vorgesehen ist.

12. Anlage nach einem der Ansprüche 9 bis 11, **dadurch gekennzeichnet, dass** ein Gebläse oder ein Kompressor (6) und gegebenenfalls ein Flussmengenregler zum Zuführen des Tailgases in das Brennersystem (2) vorgesehen ist.

13. Anlage nach Anspruch 12, **dadurch gekennzeichnet, dass** in der Rückführleitung (9) ein Verdichter (16) zur Verdichtung des rückgeführten Substitutgases vorgesehen ist.

14. Anlage nach einem der Ansprüche 9 bis 13, **dadurch gekennzeichnet, dass** eine weitere Entwässerungseinrichtung (10) zum Entwässern des verdichteten Substitutgases vorgesehen ist.

15. Anlage nach Anspruch 14, **dadurch gekennzeichnet, dass** die Entwässerungseinrichtung (5, 10) eine Kühl- bzw. Abwärmerückgewinnungseinrichtung (11) und einen Kondensatabscheider (12) zur Abscheidung von Wasser aus dem Substitutgas umfasst.

16. Anlage nach einem der Ansprüche 12 bis 15, **dadurch gekennzeichnet, dass** stromabwärts der Abzweigung der Rückführleitung (9) aus der Substitutgasleitung (4) ein weiterer Verdichter (13) angeordnet ist.

## Claims

1. Process for reducing particulate material containing iron oxide, wherein the material containing iron oxide is at least partially reduced with reducing gas in a reducing zone and the gas produced during the reduction as waste gas is drawn off and subsequently subjected to CO₂ separation, in which a tail gas containing CO₂ is separated, **characterized in that**, in order to balance out fluctuations in the amount and calorific value, the tail gas is temporarily stored in a gas accumulator, mixed with a gas containing oxygen, in particular with pure oxygen, in a burner system and combusted, thereby forming a substitute gas, the substitute gas being used after dewatering as a substitute for inert gas, in particular instead of nitrogen, at least part of the substitute gas being mixed with the gas containing oxygen and being returned to the burner system after dewatering and/or compression for setting the combustion temperature during the combustion of the tail gas.

2. Process according to Claim 1, **characterized in that**, after combustion, the substitute gas is cooled in at least one stage, in particular to a temperature of 20 to 60°C, and dewatered and compressed and optionally dried.

3. Process according to Claim 1 or 2, **characterized in that** the combustion of the mixture of tail gas and gas containing oxygen takes place in a combustion chamber.

4. Process according to one of Claims 1 to 3, **characterized in that** the tail gas is introduced into the burner system by means of a blower or a compressor, in particular with the amount being regulated by way of flowrate control.

5. Process according to Claim 4, **characterized in that** the quantitative feeding of the returned substitute gas to the burner system takes place in such a way that the flame temperature is kept constant during the combustion of the gases.

6. Process according to one of Claims 1 to 5, **characterized in that**, before the combustion, the tail gas is mixed with top gas, offgas or surplus gas from a reduction or smelting reduction process.

7. Process according to one of Claims 1 to 6, **characterized in that** the dewatered and compressed, and optionally dried, substitute gas is used in barrier gas systems of an oxide and/or coal charging operation or as propellant gas of a coal injection operation or for cooling burner lances or as a flushing and cooling gas or for controlling the flame temperature of a raceway or in burner systems or as a carrier gas for pneumatic conveyance.

8. Process according to one of Claims 4 to 7, **characterized in that** the tail gas and/or the gas containing oxygen and/or the returned substitute gas is preheated before the combustion and using the waste heat produced during the combustion.

9. Installation for reducing particulate material containing iron oxide, with a reduction unit, in which the material containing iron oxide is at least partially reduced by means of a reducing gas and the reducing gas is drawn off as top gas, and with a CO₂ separating device (1) for separating CO₂ from the top gas, thereby forming a tail gas containing CO₂, **characterized in that** there are provided a burner system (2) for mixing the tail gas with a gas containing oxygen, in particular pure oxygen, and a gas accumulator (14) for temporarily storing and homogenizing the tail gas before it is mixed with the gas containing oxygen, and a combustion chamber (3), into which these gases can be introduced and combusted, thereby forming a substitute gas, and discharged by way of a substitute-gas discharge line (4), there being provided a cooling or waste-heat recovering device including a dewatering device (5) for separating water from the substitute gas, so that a substitute for inert gas, in particular instead of nitrogen, is formed, a return line (9) being provided for returning part of the dewatered substitute gas and for introducing it into the burner system (2) after admixing gas containing oxygen for setting the combustion temperature during the combustion of the tail gas, this line branching off from the substitute gas line (4) downstream of the dewatering device (5).

10. Installation according to Claim 9, **characterized in that** at least one compressor (6), which serves for compressing the mixture of tail gas and gas containing oxygen, and optionally returned substitute gas, is arranged between the gas accumulator (14) and the burner system (2).

11. Installation according to Claim 9 or 10, **characterized in that** at least one substitute gas compressor (7) is provided for compressing the dewatered substitute gas.

12. Installation according to one of Claims 9 to 11, **characterized in that** a blower or a compressor (6), and optionally a flowrate controller, is provided for feeding the tail gas into the burner system (2).

13. Installation according to Claim 12, **characterized in that** a compressor (16) for compressing the returned substitute gas is provided in the return line (9).

14. Installation according to one of Claims 9 to 13, **characterized in that** a further dewatering device (10) is provided for dewatering the compressed substitute gas.

15. Installation according to Claim 14, **characterized in that** the dewatering device (5, 10) comprises a cooling or waste-heat recovering device (11) and a condensate separator (12) for separating water from the substitute gas.

16. Installation according to one of Claims 12 to 15, **characterized in that** a further compressor (13) is arranged downstream of the branching off of the return line (9) from the substitute gas line (4).

## Revendications

1. Procédé de réduction de particules de matières contenant des oxydes de fer, le matériau contenant des oxydes de fer étant réduit au moins partiellement dans une zone de réduction à l'aide d'un gaz de réduction, le gaz dégagé lors de la réduction étant extrait en tant que gaz d'effluent et subissant ensuite une séparation du CO₂ au cours de laquelle un gaz de queue contenant du CO₂ est séparé,
**caractérisé en ce que**
le gaz de queue est entreposé temporairement dans une réserve de gaz pour compenser les variations de débit et de pouvoir calorifique, est mélangé avec un gaz contenant de l'oxygène, en particulier avec de l'oxygène pur, et est brûlé pour former un gaz de substitution,
le gaz de substitution étant utilisé après une séparation de l'eau comme substitut du gaz inerte et en particulier en remplacement de l'azote, au moins une partie du gaz de substitution étant mélangée avec le gaz contenant de l'oxygène et renvoyée dans le système de brûleur après séparation de l'eau et/ou compression, en vue d'ajuster la température de combustion lors de la combustion du gaz de queue.

2. Procédé selon la revendication 1, **caractérisé en ce qu'**après la combustion, le gaz de substitution est refroidi, séparé de l'eau, comprimé et éventuellement séché en au moins une étape, en particulier à une température de 20 à 60°C.

3. Procédé selon les revendications 1 ou 2, **caractérisé en ce que** la combustion du mélange constitué du gaz de queue et du gaz contenant de l'oxygène s'effectue dans une chambre de combustion.

4. Procédé selon l'une des revendications 1 à 3, **caractérisé en ce que** le gaz de queue est amené dans le système de brûleur au moyen d'un ventilateur ou d'un compresseur, en particulier avec régulation du débit au moyen d'une régulation du débit d'écoulement.

5. Procédé selon la revendication 4, **caractérisé en ce que** le débit de recirculation du gaz de substitution au système de brûleur est régulé de telle sorte que la température de flamme lors de la combustion des gaz soit maintenue constante.

6. Procédé selon l'une des revendications 1 à 5, **caractérisé en ce qu'**avant la combustion, le gaz de queue est mélangé avec un gaz de tête, un gaz d'effluent ou un gaz en excès provenant d'une opération de réduction ou de fusion réductrice.

7. Procédé selon l'une des revendications 1 à 6, **caractérisé en ce que** le gaz de substitution séparé de l'eau, comprimé et éventuellement séché est utilisé comme gaz porteur dans des systèmes de gaz de blocage d'un chargement d'oxyde et/ou de charbon, comme gaz propulseur d'une injection de charbon, pour refroidir des lances de brûleur, comme gaz de balayage et de refroidissement, pour contrôler la température des flammes d'un conduit ou sur le système de brûleur ou pour un transport pneumatique.

8. Procédé selon l'une des revendications 4 à 7, **caractérisé en ce que** le gaz de queue, le gaz contenant de l'oxygène et/ou le gaz de substitution recirculé sont préchauffés avant la combustion en utilisant la chaleur dégagée lors de la combustion du gaz de queue.

9. Installation de réduction de particules de matières contenant des oxydes de fer à l'aide d'un ensemble de réduction, dans lequel le matériau contenant des oxydes de fer est réduit au moins partiellement au moyen d'un gaz de réduction, le gaz de réduction étant extrait en tant que gaz de tête,
l'installation présentant un dispositif (1) de séparation du CO₂ qui sépare le CO₂ du gaz de tête pour former un gaz de queue contenant du CO₂,
**caractérisée en ce que**
elle présente un système de brûleur (2) qui mélange le gaz de queue avec un gaz contenant de l'oxygène, en particulier de l'oxygène pur, et une réserve (14) de gaz qui entrepose temporairement et homogénéise le gaz de queue avant son mélange avec le gaz contenant de l'oxygène,
une chambre de combustion (3) dans laquelle ces gaz peuvent être apportés, brûlés en formant un gaz de substitution et évacués par un conduit (4) d'évacuation de gaz de substitution,
un dispositif de refroidissement ou de récupération de chaleur qui inclut un dispositif (5) de séparation d'eau qui sépare l'eau du gaz de substitution, de sorte que l'on forme un substitut pour le gaz inerte et en particulier de l'azote,
un conduit (9) de recirculation qui recircule une partie du gaz de substitution séparé de l'eau et, après addition de gaz contenant de l'oxygène, l'envoie dans le système de combustion (2) pour ajuster la température de combustion lors de la combustion du gaz de queue, ce conduit de recirculation partant du conduit (4) de gaz de substitution en aval du dispositif (5) de séparation d'eau.

10. Installation selon la revendication 9, **caractérisée en ce qu'**au moins un compresseur (6) est prévu entre la réserve (14) de gaz et le système de brûleur (2) et sert à comprimer le mélange de gaz de queue, de gaz contenant de l'oxygène et éventuellement de gaz de substitution recirculé.

11. Installation selon les revendications 9 ou 10, **caractérisée en ce qu'**au moins un compresseur (7) de gaz de substitution est prévu pour comprimer le gaz de substitution séparé de l'eau.

12. Installation selon l'une des revendications 9 à 11, **caractérisée en ce qu'**un ventilateur ou un compresseur (6) et éventuellement un régulateur de débit d'écoulement sont prévus pour apporter le gaz de queue dans le système de brûleur (2).

13. Installation selon la revendication 12, **caractérisée en ce qu'**un compresseur (16) qui comprime le gaz de substitution recirculé est prévu dans le conduit de recirculation (9).

14. Installation selon l'une des revendications 9 à 13, **caractérisée en ce qu'**un autre dispositif (10) de séparation d'eau est prévu pour séparer l'eau du gaz de substitution comprimé.

15. Installation selon la revendication 14, **caractérisée en ce que** les dispositifs (5, 10) de séparation d'eau comportent un dispositif (11) de refroidissement ou de récupération des chaleurs perdues et un séparateur (12) de condensats qui sépare l'eau du gaz de substitution.

16. Installation selon l'une des revendications 12 à 15, **caractérisée en ce qu'**un autre compresseur (13) est disposé en aval du départ du conduit de recirculation (9) hors du conduit (4) de gaz de substitution.
